# EUROPEAN PATENT APPLICATION

(11) **EP 1 679 257 A2**
(43) Date of publication of application: **12.07.2006**
(21) Application number: 05027551.0
(22) Date of filing: 15.12.2005
(51) Int. Cl.: B62M 25/04

(54) **Bicycle shift control device**

(30) Priority: 07.01.2005 US 30201
(71) Applicant: SHIMANO INC., Osaka 590-8577 (JP)
(72) Inventor: Irie, Yoshinori, Sakai Osaka 590-8577 (JP)
(74) Representative: Hofmann, Harald

(57) **Abstract**

A bicycle shift control device (12) is provided for clearly displaying a current shift position to the rider. The bicycle shift control device (12) has a housing (24) with an indicating portion (42) having a plurality of indicia bores (44). An indicating member (28) is operatively coupled to a shift member (26), which is coupled to the housing (24). The indicating member (28) is configured to selectively align with at least one of the indicia bores (44) in response to operation of the shift member (26).

## Description

### BACKGROUND OF THE INVENTION

### Field of the Invention

This invention generally relates to a bicycle shift control device. More specifically, the present invention relates to a shift control device having an indicating member operatively connected to a part of the transmission system of a bicycle to indicate the position of the gears of a bicycle.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving various components of the bicycle. One component that has been extensively redesigned on the bicycle is the shift control device.

The shift control devices are constantly being designed so as to be more ergonomic and user friendly. There are many types of shift control devices that are currently available on the market. The shift control devices range in quality and price. Typically, the shift control devices are provided with some sort of gear position indicator. Some gear position indicators are integrally combined with the shift control device. When the gear position indicator is integrated with the shift control device, the gear position indicator is often connected to the inner wire of the shift control cable. While these prior gear indicators may work well, some of these prior gear position indicators are very complicated and expensive to manufacture and/or assembly. Moreover, of these prior gear position indicators do not clearly display the gear position in a simple manner.

In view of the above, it will be apparent to those skilled in the art from this disclosure that there exists a need for an improved shift control device with a gear position indicator that simply and clearly indicates the current gear position. This invention addresses this need in the art as well as other needs, which will become apparent to those skilled in the art from this disclosure.

### SUMMARY OF THE INVENTION

One object of the present invention is to provide improved shift control device with a gear position indicator that simply and clearly indicates the current gear position.

Another object of the present invention is to provide improved shift control device with a gear position indicator that simply and clearly indicates the current gear position that is relatively simple and inexpensive to manufacture and/or assembly.

The foregoing objects can basically be attained by providing a bicycle shift control device having a housing, a shift member coupled to the housing and an indicating member. The housing includes an indicating portion having a plurality of indicia bores. The indicating member is operatively coupled to the shift member and is configured to selectively align with at least one of the indicia bores in response to operation of the shift member.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a right side elevational view of a conventional bicycle equipped with a pair of shift control devices in accordance with one embodiment of the present invention;

Figure 2 is an elevational view of the right shift control device coupled to the handlebar of the conventional bicycle in accordance with one embodiment of the present invention;

Figure 3 is a transverse cross-sectional view of the shift control device illustrated in Figures 1 and 2 in accordance with one embodiment of the present invention as viewed along section line 3-3 of Figure 2;

Figure 4 is an elevational view of the left shift control device coupled to the handlebar of the conventional bicycle of Figure 1 in accordance with another embodiment of the present invention; and

Figure 5 is an elevational view of the left shift control device coupled to the handlebar of the conventional bicycle of Figure 1 in accordance with a yet another embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

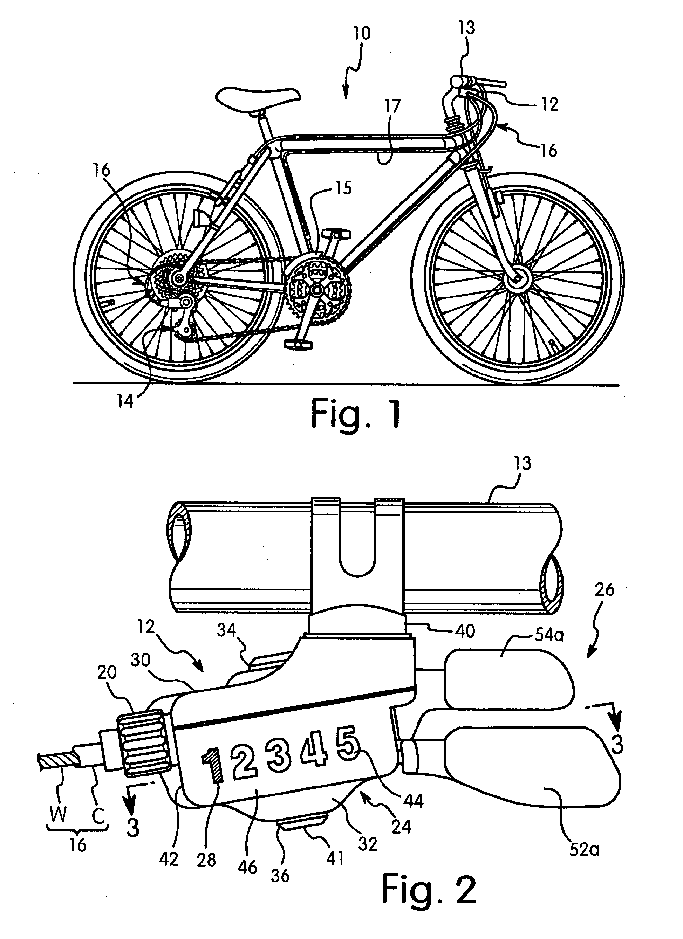

Referring initially to Figure 1, a conventional bicycle 10 is illustrated with a pair of shift control devices 12 (only the right one shown in Figure 1) in accordance with a first embodiment of the present invention. The bicycle 10 is a typical bicycle that includes a handlebar 13, a rear derailleur 14 and a front derailleur 15. A rear shift control cable 16 is operatively attached between the rear derailleur 14 and the right shift control device 12. Similarly, a shift control cable 17 is operatively attached between the front derailleur 15 and the left shift control device 12.

The bicycle 10 and its various components, except for the shift control devices 12, are well-known in the prior art. Thus, bicycle 10 and its various components will not be discussed or illustrated in detail herein, except for the components that relate to the present invention. In other words, only the shift control devices 12 and the components that relate thereto will be discussed and/or illustrated herein.

Basically, the right and left shift control devices 12 are substantially identical to each other, except that they are mirror images and have different numbers of gear shifting stages. Of course, it will be apparent to those skilled in the art that shift control devices 12 can have any number of gear shifting positions. The number of gear shifting positions or stages will depend upon the number of gears or sprockets used in the bicycle's transmission.

In view of the similarities between the shift control devices 12, only one shift control device 12 will be discussed or illustrated in detail herein. It will be apparent to those skilled in the art from this disclosure that the description and illustrations of the shift control device 12 applies to the construction and operation of the other one of the shift control devices 12.

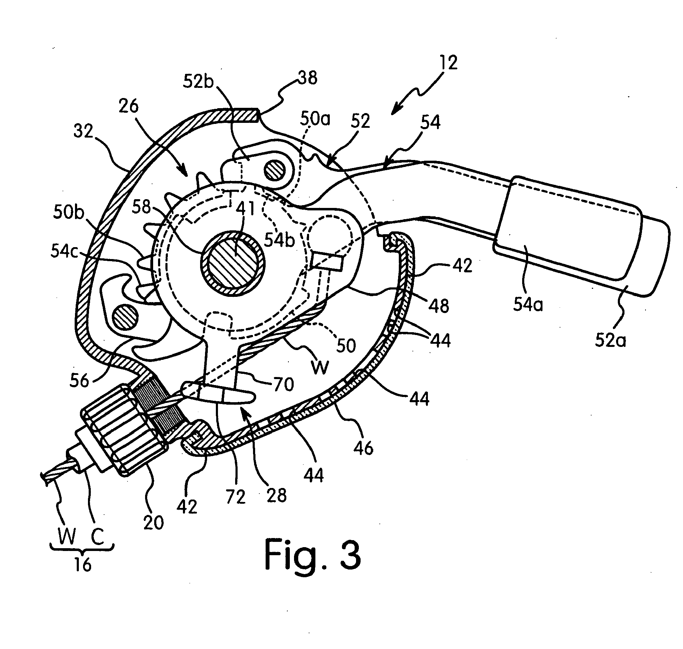

Referring to Figures 2 and 3, the shift control device 12 basically includes a housing 24, a shift member or mechanism 26 and an indicating member or mechanism 28. Generally, the housing 24 is fixedly attached to the handlebar 13 and is formed by a plurality of plastic pieces. The housing 24 is connected to the shift control cable 16 via an adjustable cable connector 20. The shift control cable 16 includes an outer casing C that surrounds an inner wire W. The inner wire W extends into the housing 24 and is coupled to the shift control device 12. Operation of the shift member or mechanism 26 results in the inner wire W being pulled or released to shift the rear derailleur 14.

The housing 24 basically includes a first or upper housing part 30, a second or lower housing part 32 and a handlebar attachment part 40. The first housing part 30 includes a first pivot aperture 34, while the second housing part 32 includes a second pivot aperture 36. Generally, the first and second apertures 34 and 36 pivotally support the shift mechanism 26 and the indicating member 28. The first housing part 30 and the second housing part 32 are preferably coupled together by fastener 41 to form a hollow interior space that encloses the majority of the shift mechanism 26 and the indicating member 28. The fastener 41 extends through the first and second pivot apertures 34 and 36. The first housing part 30 and the second housing part 32 are configured to form a lever opening 38 when coupled together. In the illustrated embodiment, the handlebar attachment part 40 is fixedly coupled to the first housing part 30. Thus, the handlebar attachment part 40 couples the entire shift control device 12 to the handlebar 13 when the second housing part 34 is connected with the first housing part 30.

The second housing part 32 of the housing 24 preferably has an indicating portion 42 and a transparent member or shield 46. The indicating portion 42 is generally on a portion of the second housing part 32 that faces the rider. The indicating portion 42 includes a plurality of indicia bores 44. Each indicia bore 44 is formed in the shape of a letter or numeral or other gear indicating shape. Preferably, each indicia bore 44 corresponds with a particular gear or shift position. Specifically, the indicia bores 44 can form sequential numbers corresponding with the sequential shift positions of the bicycle 10 as shown.

The transparent member 46 lies on the outside of the second housing part 32 of the housing 24 such that the indicia bores 44 are covered. The transparent member 46 protects the inside of the housing 24 from wind, dirt and other unwanted elements that may adversely affect the shift control device 12. Of course, it will be clear to one of skill in the art that the transparent member 46 can be placed against the indicia bores 44 from the inside of the housing 24 as well. The transparent member 46 is preferably composed of a thin, transparent, plastic strip. The transparent member 46 can also be composed of colored plastic and/or have a semi-transparent configuration.

Referring now to Figure 3, the shift mechanism 26 of the shifting device 12 will now be briefly discussed. The shift mechanism 26 is substantially located inside the housing 24. The shift mechanism 26 basically includes a cable take-up member 48, a positioning plate or ratchet 50, a winding member 52, a release member 54 and a positioning pawl 56. The cable take-up member 48, the winding member 52 and the release member 54 are pivotally mounted on a pivot member or pin 58. The pivot pin 58 is preferably an elongated cylindrical member that is positioned around the fastener 41. The pivot pin 58 forms a central axis for both the housing 24 and the shift member 26.

Rotation of the winding member 52 causes the cable take-up member 48 to pull the inner wire W of the cable 16 such that the inner wire W is wound about the peripheral edge of the cable take-up member 48. On the other hand, rotation of the release member 54 causes the cable take-up member 48 to release the inner wire W of the cable 16 such that the inner wire W is unwound from the peripheral edge of the cable take-up member 48.

The cable take-up member 48 is rotatably mounted for rotating or pivoting about the rotational axis formed by the pivot pin 58. Thus, the pivot pin 58 extends through a center pivot aperture of the cable take-up member 48. The inner wire W of the shift control cable 16 is attached to the cable take-up member 48 such that rotation of the cable take-up member 48 about the pivot pin 58 causes the inner wire W to be wound or unwound about the pivot pin 58.

The positioning plate or ratchet 50 is rotatably mounted for rotating or pivoting about the rotational axis formed by the pivot pin 58. Thus, the pivot pin 58 extends through a center pivot aperture of the positioning plate 50. The positioning plate 50 is fixed to the cable take-up member 48 so that they rotate together as a single unit. The positioning plate 50 preferably includes a plurality of winding teeth 50a and a plurality of positioning teeth 50b. The winding teeth 50a are selectively engaged by the winding member 52 to rotate the cable take-up member 48 and the positioning plate 50 together in a cable winding direction (counterclockwise in Figure 3), while the positioning teeth 50b are selectively engaged by the positioning pawl 56 to maintain the cable take-up member 48 and the positioning plate 50 in a selected gear position.

A biasing member (not shown) such as a torsion spring is mounted on the pivot pin 58 to bias the cable take-up member 48 and the positioning plate 50 in a cable release direction (clockwise in Figure 3). Through the use of the biasing member (not shown) and the positioning pawl 56, the positioning plate 50 maintains the selected gear position of the cable take-up member 48.

The winding member 52 is preferably includes a winding lever 52a with a winding pawl 52b. The winding member 52 is rotatably mounted for rotating or pivoting about the rotational axis formed by the pivot pin 58. Thus, the pivot pin 58 extends through a center pivot aperture of the winding member 52. A biasing member (not shown) such as a torsion spring is mounted on the pivot pin 58 to bias the winding member 52 in a cable release direction (clockwise in Figure 3) of the cable take-up member 48. When the rider pushes the winding lever 52a, the movement causes the cable take-up member 48 to pivot about the pivot pin 58. This movement of the winding lever 52a about the pivot pin 58 causes the inner wire W to be pulled so as to shift the derailleur 14. In particular, the winding pawl 52b is pivotally mounted on the winding lever 52a to move into and out of engagement with the winding teeth 50a of the positioning plate 50. The winding pawl 52b is normally urged towards the winding teeth 50a by a torsion spring or biasing member (not shown) that is mounted on the pivot pin of the winding pawl 52b. Thus, when the rider pushes the winding lever 52a, the movement causes the winding pawl 52b to engage the winding teeth 50a to rotate the positioning plate 50 and the cable take-up member 48 about the pivot pin 58.

The release member 54 is preferably includes a release lever 54a with a first cam 54b and a second cam 54c. The release member 54 is rotatably mounted for rotating or pivoting about the rotational axis formed by the pivot pin 58. Thus, the pivot pin 58 extends through a center pivot aperture of the release member 54. A biasing member (not shown) such as a torsion spring is mounted on the pivot pin 58 to bias the release member 54 in a cable release direction (clockwise in Figure 3) of the cable take-up member 48. When the rider pushes the release lever 54a, this movement causes the first and second cams 54b and 54c to release the positioning plate 50 so the cable take-up member 48 can rotate about the pivot pin 58. This movement of the cable take-up member 48 further causes the inner wire W to be partially unwound (released). Thus, pushing the release lever 54a causes the inner wire W to be released so as to shift the derailleur 14.

More specifically, the first cam 54b is located such that when the release lever 54a is pushed, the first cam 54b rotates into engagement with the winding pawl 52b to pivot the winding pawl 52b out of engagement with the winding teeth 50a of the positioning plate 50. Also, when the release lever 54a is pushed, the second cam 54c rotates into engagement with the positioning pawl 56 to pivot the positioning pawl 56 out of engagement with the positioning teeth 50b of the positioning plate 50.

The precise construction and interaction of the parts of the shift mechanism 26 are not critical to the present invention. Therefore, the precise construction and interaction of the parts of the shift mechanism 26 will not be discussed or illustrated in further detail herein. Moreover, it will be readily apparent to those skilled in the art from this disclosure that the precise construction and interaction of the parts of the shift mechanism 26 can be similar to other types of known shift mechanisms that can carry out the present invention.

Still referring to Figures 2 and 3, the indicating member 28 of the shift control device 12 is illustrated. The indicating member 28 includes an extension 70 and a colored member 72. The indicating member 28 is fixed to the cable take-up member 48 via the extension 70. The extension 70 extends in a generally radial direction from the cable take-up member 48 to the colored indicator or member 72. The colored member 72 is positioned on a free end of the extension 70 so that moves behind the indicia bores 44 as the shift mechanism 26 is operated. Thus, the indicating member 28 is fixedly coupled to the cable take-up member 48 of the shift mechanism 26 such that the shift mechanism 26 and the indicating member 48 pivot about the same pivot axis. Preferably, the indicating member 28, the cable take-up member 48, the release lever 54a and the winding lever 52a pivot about a single pivot axis.

The indicating member 28 indicates to the rider a shift position of the bicycle 10 using the indicia bores 44 each of which corresponds with a shift position. Accordingly, the indicating member 28 is operatively coupled to the cable take-up member 48 of the shift mechanism 26 and is configured and arranged to selectively align with at least one of the indicia bores 44 in response to operation of the shift mechanism 26. Furthermore, in response to operation of the shift mechanism 26, the indicating member 28 is in alignment with the indicia bore 44 that corresponds with the shift position.

The indicating member 28, including the colored member 72, may be formed from any colored material. The color of the indicating member 28 is preferably in contrast to the color of the housing 24 or other surrounding bicycle components. Furthermore, the indicating member 28 preferably has a color which contrasts with a color of the transparent member 46. More preferably, the indicating member 28 is configured and arranged to cause a contrast to occur between one of the indicia bores 44 and all remaining ones of the indicia bores 44.

### SECOND EMBODIMENT

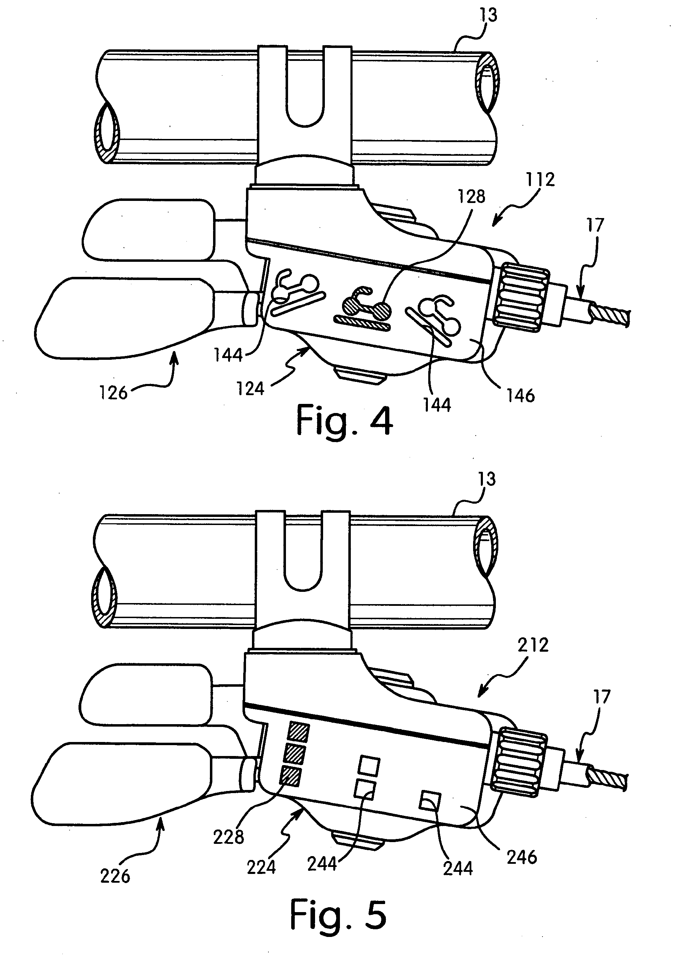

Referring now to Figure 4, a left shift control device 112 is illustrated in accordance with a second embodiment of the present invention. In view of the similarity between the first and second embodiments, the descriptions of the parts of the second embodiment that are identical to the parts of the first embodiment are omitted for the sake of brevity. The shift control device 112 basically includes a housing 124, a shift member or mechanism 126 and an indicating member or mechanism 128. The housing 124 is identical to the housing 24, except that the shape of the indicia bores 44 have been changed to a set of indicia bores 144 as explained below. A transparent member 146 lies on the outside of the lower housing part of the housing 124 such that the indicia bores 144 are covered in the same manner as the first embodiment. The shift mechanism 126 is identical to the shift mechanism 26, except that the shape of the positioning plate 50 have been changed to only provide three shift positions instead of five shift positions. The indicating member 128 is identical to the indicating member 28.

Figure 4 illustrates an example of the indicia bores 144 having a graphic shape. In other words, each of the indicia bores 144 is a graphic design bore that is formed into an indicating portion 142 of the housing 124 to correspond with a shift position. The indicia bores 144 can be pictures illustrating situations when the rider should operate the shift control device 112 to select the corresponding shift position. For example, the graphic design in the second embodiment of the present invention includes indicia bores 144 in the general shape of a bicycle. Each of the indicia bores 144 is generally shaped as a bicycle that is either traveling up an incline, on a level surface, or down an incline. Accordingly, the graphic shaped indicia bores 144 of the second embodiment not only indicate various shift positions of the bicycle 10 but also instruct the rider when to shift to each shift position.

The shift mechanism 126 and the indicating member 128 of the shift control device 112 operate in the same manner as the first embodiment such that in response to the operation of the shift mechanism 126, the indicating member 128 is in alignment with the graphic shaped indicia bore 144 that corresponds with the shift position. This causes a contrast to occur between one of the graphic shaped indicia bores 144 and all remaining ones of the graphic indicia bores 144.

For example, in Figure 4, the graphic shaped indicia illustrating a bicycle on a level surface is selected. This causes a contrast to occur between it and the other graphic shaped indicia bores 144.

### THIRD EMBODIMENT

Referring now to Figure 5, a left shift control device 212 is illustrated in accordance with a third embodiment of the present invention. In view of the similarity between the first and third embodiments, the descriptions of the parts of the third embodiment that are identical to the parts of the first embodiment are omitted for the sake of brevity. The shift control device 212 basically includes a housing 224, a shift member or mechanism 226 and an indicating member or mechanism 228. The housing 224 is identical to the housing 24, except that the shape of the indicia bores 44 have been changed to a set of indicia bores 244 as explained below. A transparent member 246 lies on the outside of the lower housing part of the housing 224 such that the indicia bores 244 are covered in the same manner as the first embodiment. The shift mechanism 226 is identical to the shift mechanism 26, except that the shape of the positioning plate 50 have been changed to only provide three shift positions instead of five shift positions. The indicating member 228 is identical to the indicating member 28.

Figure 5 illustrates an example of the indicia bores 244 having a geometric shape. In other words, each of the indicia bores 244 is a geometric bore that is formed into an indicating portion 242 of the housing 224 to correspond with a shift position. The indicia bores 244 can be boxes or squares with the number of boxes or squares corresponding to the shifting position of the bicycle 10. For example, the indicia bores 244 include three boxes or squares that are vertically aligned for indicating a third shift position of the bicycle 10 when the indicating member 228 is located behind the three vertically aligned boxes or squares as seen in Figure 5.

The shift member 226 and indicating member 228 of the shift control device 12 operate in the same manner as the first embodiment such that in response to the operation of the shift member 226, the indicating member 228 is in alignment with the indicia bores 244 that correspond with the shift position. This causes a contrast to occur between one or more of the indicia bores 244 from all remaining ones of the graphic indicia bores 244.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle shift control device comprising:
a housing including an indicating portion having a plurality of indicia bores;
a shift member coupled to the housing; and
an indicating member operatively coupled to the shift member and being configured to selectively align with at least one of the indicia bores in response to operation of the shift member.

2. The bicycle shift control device according to claim 1, wherein the indicia bores includes at least a numeral shaped bore, a letter shaped bore, and/or a graphic shaped bore.

3. The bicycle shift control device according to claim 1 or 2, wherein the indicia bores form sequential numbers, letters and/or graphics.

4. The bicycle shift control device according to anyone of claims 1 to 3, wherein the indicating member includes a coloured member.

5. The bicycle shift control device according to anyone of claims 1 to 4, wherein the housing further includes a transparent member overlying the indicia bores, in particular said indicating member being on the inside of the transparent member.

6. The bicycle shift control device according to anyone of claims 1 to 5, wherein the indicating member has a colour which contrasts with a colour of the transparent member, and/or with a colour of housing.

7. The bicycle shift control device according to anyone of claims 1 to 6, wherein the shift member and the indicating member pivot about a pivot axis, in particular about a common pivot axis.

8. The bicycle shift control device according to anyone of claims 1 to 7, wherein the indicating member is configured and arranged to cause a contrast to occur between one of the indicia bores and all remaining ones of the indicia bores.

9. The bicycle shift control device according to anyone of claims 1 to 8, wherein each indicia bore corresponds with a shift position, and
in response to operation of the shift member, the indicating member is in alignment with the indicia bore that corresponds with the shift position.

10. The bicycle shift control device according to anyone of claims 1 to 9, wherein the shift member includes a cable take-up member having a cable attached thereto, in particular said indicating member being fixed to the cable take-up member.

11. The bicycle shift control device according to anyone of claims 1 to 10, wherein the shift member includes at least one shift lever and a cable take-up member operatively coupled to the shift lever, in particular said shift lever, said indicating member and said cable take-up member pivoting about a single pivot axis.
